# EUROPEAN PATENT APPLICATION

(11) **EP 2 770 345 A2**
(43) Date of publication of application: **27.08.2014**
(21) Application number: 14155826.2
(22) Date of filing: 19.02.2014
(51) Int. Cl.: G01V 1/38

(54) **Activation Electronics and Method for Seismic Equipment Recovery Device**

(30) Priority: 22.02.2013 US 201361767879 P
(71) Applicant: CGG Services SA, 91300 Massy (FR)
(72) Inventor: PONCEAU, Damien, 91300 MASSY (FR); LE ROUX, Pierre, 91300 MASSY (FR)
(74) Representative: Regimbeau

(57) **Abstract**

An activation module (400) to be used in a seismic equipment recovery device. The activation module includes a processor (402); a pressure transducer (404) configured to measure a pressure of the ambient and provide the measured pressure to the processor (402); a memory (440) connected to the processor (402) and configured to store information related to a pressure or depth threshold; and a communication unit (450) connected to the memory (440) and configured to exchange information with an external device (310). The processor (402) is configured to send a deployment instruction to an inflation mechanism (428) to inflate a flotation bag (430) based on the measured pressure and the stored information.

## Description

### BACKGROUND

### TECHNICAL FIELD

Embodiments of the subject matter disclosed herein generally relate to methods and systems and, more particularly, to mechanisms and techniques for triggering a recovery device, associated with seismic equipment used for marine geophysical exploration, when a given depth is exceeded.

### DISCUSSION OF THE BACKGROUND

Reflection seismology is a method of geophysical exploration to determine the properties of a portion of a subsurface layer in the earth, which information is especially helpful in the oil and gas industry. Marine reflection seismology is based on the use of a controlled seismic source that sends energy waves into the earth. By measuring the time it takes for the reflections to come back to plural receivers, it is possible to estimate the depth and/or composition of the features causing such reflections. These features may be associated with subterranean hydrocarbon deposits.

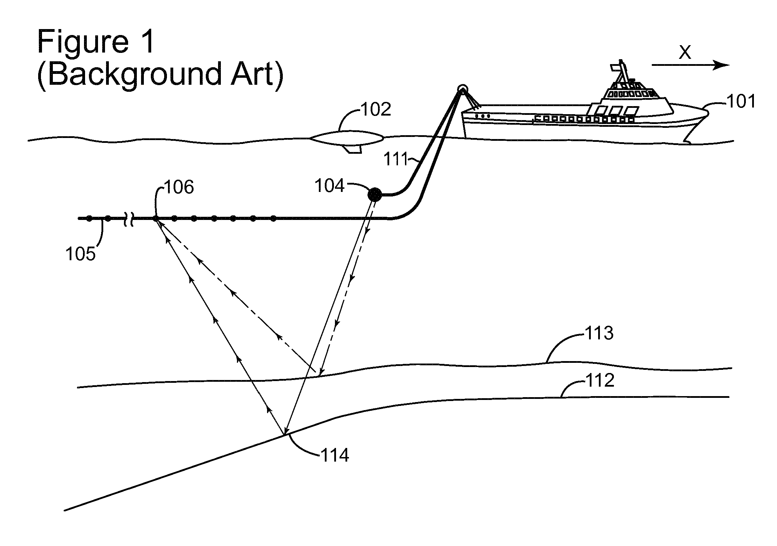

For marine applications, a seismic source is towed by a vessel at a certain depth along direction X as illustrated in Figure 1. Acoustic waves from the seismic source (air gun, water gun, vibratory source, etc.) propagate in all directions. Figure 1 shows a source array 104 being towed behind a vessel 101 at a shallow depth. The source array 104 may be connected to a float 102 for floating at a given depth and also to the vessel 101 by an umbilical 111 for receiving, for example, electrical signals and/or compressed air. When the source array is activated, acoustic energy is coupled into the water and transmitted into the earth, where it is partially reflected back from the ocean bottom 113 and from rock formation interfaces 112 (rock layer that has a change in acoustic impedance). Sensors or receivers 106, located along a streamer 105, are used to record the reflected energy. Such receivers may include hydrophones, geophones and/or accelerometers. The receivers can be encapsulated in either fluid-filled or solid streamers 105 that are also towed by vessels at shallow depths.

Currently, it is typical for one vessel to tow multiple streamers with diverters employed to ensure streamer separation by a fixed distance. In order to maintain proper spacing between the streamers and sources, the vessel moves forward continuously, typically at a rate of about 4 knots (2 m/s). In some cases, the positions of the streamers can be controlled so that all receivers are at a common depth or, in other cases, the receivers in each streamer are controlled to follow a particular depth profile.

Modern streamers are equipped with steering devices, compasses and GPS receiver buoys. Steering devices are equipped with wings or fins, and are spaced at intervals and may be in communication with the vessel to control streamer depth and transverse spatial position. Alternatively, the receivers can be stationary and positioned on the ocean floor as autonomous nodes or in an ocean-bottom cable.

Depending upon the sensor type, the returning energy is recorded as a pressure or acceleration variation as a function of time at each receiver position. Combining recordings made at multiple source and receiver locations can be used to form an image of the earth's subterranean features. Images formed from reflection seismology are useful for locating structures that are indicative of oil and/or gas reservoirs.

The above-described seismic equipment (e.g., streamers, steering devices, sensors) is expensive, sometimes on the order of million of dollars, and unexpected events do occur that might lead to loss of it, e.g., vessel power failure, steering failure or collision may lead to losing control of the seismic equipment, which can result in streamers and embedded hardware sinking deep into the water. Another possible situation is when another vessel (not belonging to the seismic survey) crosses the streamers and cuts one or more of them. In this situation, part of the streamer is detached from the vessel and lost. Still another possibility is when the streamer simply detaches from the front-end gear and is lost at sea.

These events lead to the streamer or a part of it not being towed any more, and, if the buoyancy is slightly negative, sinking to the ocean bottom. Streamer performance can be significantly affected by exposure to high pressures, even of short duration, beyond a prescribed value. In the same way, high-pressure exposure can completely destroy the streamers and/or embedded hardware. To avoid the occurrence of such depth exposures, streamers are equipped with autonomous devices called "streamer recovery devices" designed to add positive buoyancy to them as soon as they reach a pre-defined "activation depth."

An example of such a streamer recovery device is described in U.S.

Patent No. 5,404,339, the entire disclosure of which is incorporated herein by reference. This streamer recovery device has a two-compartment enclosure hosting a flotation system (mainly a non-magnetic gas supply and an inflatable member) and a triggering means.

The triggering means for current devices is based on a pressure switch that toggles when a pre-defined activation depth is exceeded. Electronics associated with the triggering means then activate the flotation device. When the flotation device is activated, a bottle filled with gas opens and the gas inflates a bag and deploys it outside the streamer recovery device. The triggering means is usually called the "activation module."

However, use of pressure switches, i.e., switches that toggle when seawater pressure reaches a predetermined level in combination or not with a printed circuit board that monitors a state of the pressure switch, have their own limitations. For example, when the switch state changes, it immediately emits a signal that triggers deployment of the flotation bag. Thus, if there is a pressure transient or a temporary dip of the streamer, existing recovery devices automatically trigger flotation bag deployment although there is no need. In other words, the reliability and accuracy of this type of activation modules are of concern because unwanted activation of recovery devices could result in great operational costs.

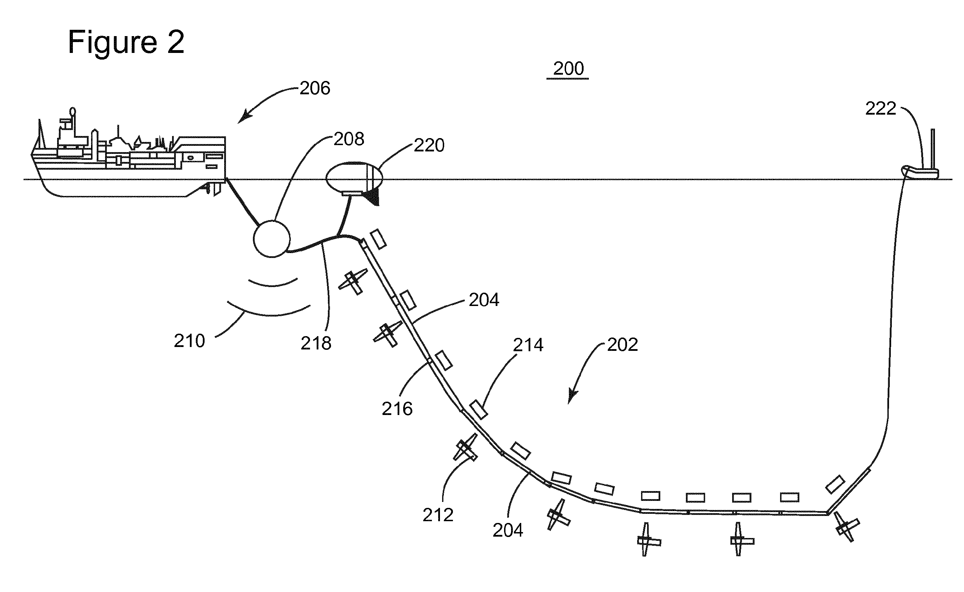

A further complication with existing streamer recovery devices is associated with the recent introduction of depth-varying streamers as illustrated in Figure 2. A conventional streamer, illustrated in Figure 1, is usually towed at a constant depth, e.g., less than 15 m. Thus, all the streamer recovery devices are programmed to inflate their corresponding flotation bags at a depth of about 50 m. However, the seismic survey system 200 of Figure 2 has variable-depth streamers 202 that include multiple sections 204. A vessel 206 tows these streamers and also, optionally, a source 208 that emits acoustic waves 210. One or more sections may include appropriate steering devices (e.g., birds) 212 and streamer recovery devices 214. One section connects to another section through a corresponding connector 216, and the entire streamer 202 is connected to the vessel 206 with a lead-in 218. A head buoy 220 may be fixed to a head end of streamer 202 and a tail buoy 222 may be attached to a tail end of streamer 202 for maintaining a desired depth of the streamer ends and/or providing communication with the vessel and a global positioning system.

For such streamer configuration, multiple streamer recovery devices are placed along each streamer, and streamer recovery device may have another depth threshold for activation, i.e., a streamer recovery device next to the head end of the streamer may have a smaller depth threshold than a streamer recovery device located next to the streamer's tail end. Given that currently a streamer may have a length of about 15 km and a spread may include up to 24 streamers, the number of streamer recovery devices becomes large, and keeping track of each one and its associated depth threshold becomes a huge logistical problem, which makes operation of the seismic survey challenging. Also, the amount of equipment onboard for tracing each device and its corresponding depth threshold is increased and would require extensive time to change from one configuration to another when survey configurations change.

Thus, there is a need to find another way to handle the depth threshold in each streamer recovery device and to easily keep track of these devices.

### SUMMARY

According to one embodiment, there is an activation module to be used in a seismic equipment recovery device. The activation module includes a processor; a pressure transducer configured to measure a pressure of the ambient and provide the measured pressure to the processor; a memory connected to the processor and configured to store information related to a pressure or depth threshold; and a communication unit connected to the memory and configured to exchange information with an external device. The processor is configured to send a deployment instruction to an inflation mechanism to inflate a flotation bag based on the measured pressure and the stored information.

According to another embodiment, there is a streamer recovery device for recovering a streamer lost at sea, the streamer recovery device including a flotation bag; an inflation mechanism for inflating the flotation bag; and an activation module configured to send a deployment instruction to the inflation mechanism to inflate the flotation bag based on (i) a measured pressure and (ii) stored information.

According to yet another embodiment, there is a seismic survey system for acquiring seismic data. The system includes a streamer having plural seismic sensors; and at least a streamer recovery device on the streamer. The streamer recovery device includes a flotation bag, an inflation mechanism for inflating the flotation bag, and an activation module configured to send a deployment instruction to the inflation mechanism to inflate the flotation bag based on (i) a measured pressure and (ii) stored information.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 illustrates a traditional marine seismic survey system;
Figure 2 is a schematic diagram a seismic survey system having a variable-depth streamer;
Figure 3 is a schematic diagram of a streamer recovery device according to an embodiment;
Figure 4 is a schematic diagram of an activation module according to an embodiment;
Figure 5A illustrates a streamer recovery device external to a streamer according to an embodiment;
Figure 5B illustrates a streamer recovery device incorporated in the streamer according to an embodiment;
Figure 6 is a flow-chart of a method for using a streamer recovery device according to an embodiment; and
Figure 7 is a schematic diagram of a seismic survey system having at least one streamer equipped with a streamer recovery device.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to a streamer recovery device attached to a streamer. However, the streamer recovery device may be attached to other seismic equipment, for example, a cable or a source.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

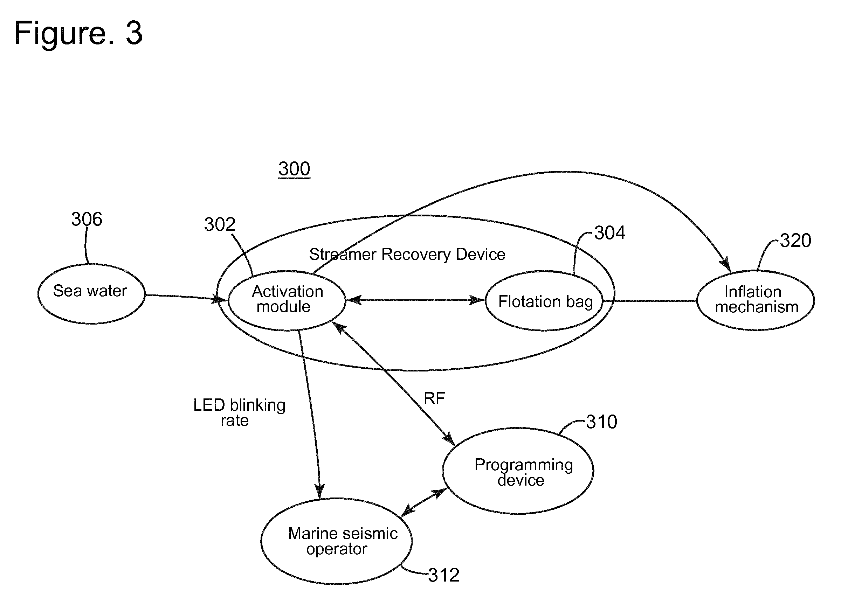

According to an embodiment illustrated in Figure 3, a new streamer recovery device has an activation module that can be remotely programmed with a programming device by the operator of the seismic survey. According to this embodiment, the streamer recovery device does not use a pressure switch that automatically triggers deployment of the flotation bag. Instead, the activation module includes at least a processor and associated software that together make a "smart" decision on when to deploy the flotation bag. In other words, instead of having a mechanical device that toggles when a certain depth or pressure is reached, the new hardware and/or software activation module is more intelligent, and able to "judge" when to deploy the flotation bag, even if a depth or pressure threshold has been reached.

Figure 3 schematically illustrates a streamer recovery device (SRD) 300 that includes an activation module 302 and a flotation bag 304. Flotation bag 304 may be made of any material and may have any shape, as known in the art. Typically, flotation bag 304 is folded to occupy a small volume and it may be located in one chamber of the SRD. Activation module 302 has at least a component, e.g., pressure sensor that interacts with the ambient, e.g., water 306 for measuring its pressure. The activation module may include radio communication means, e.g., transceiver and corresponding antenna, for communicating with a programming device 310. The operator 312 programs the SRD through the programming device 310 to modify its depth or pressure threshold, and/or to retrieve data from the SRD. In one application, programming device 310 communicates one by one with each SRD.

However, it is possible that programming device 310 simultaneously communicates with plural SRDs to save time. For this last case, the operator inputs the desired values for each SRD in the programming device while onshore or onboard the vessel and then places the programming device in communication with the SRDs. In one application, the programming device communicates with the SRDs using radio frequencies. However, it is also possible to use other wireless protocols, for example, Bluetooth or WiFi, or RFID, etc., for establishing communication with the SRDs. In still another application, it is possible to use the streamer itself to exchange data between the programming device and the SRD, i.e., while the streamer is deployed and towed underwater, a signal is transmitted from the programming device 310 through the streamer's data channel to a given SRD (each of them having a single identifier), and the SRD receives that signal, for example, in a wireless manner, e.g., inductively coupling with the streamer underwater.

Activation module 302 may also include a visual interface, e.g., an LED having different states, for quickly communicating its status to the operator without the need to use the programming device.

Figure 3 also illustrates an inflation mechanism 320 that may be fluidly connected to the flotation bag to inflate it. The inflation mechanism may be controlled by activation module 302. For example, it is possible to have an explosive material inside the inflation mechanism that activates the fluid connection between a gas bottle under pressure stored in the inflation mechanism and the flotation bag to make the flotation bag inflate. Another mechanism may also be used, for example, providing a valve between the gas bottle and the flotation bag, which is controlled by the activation module.

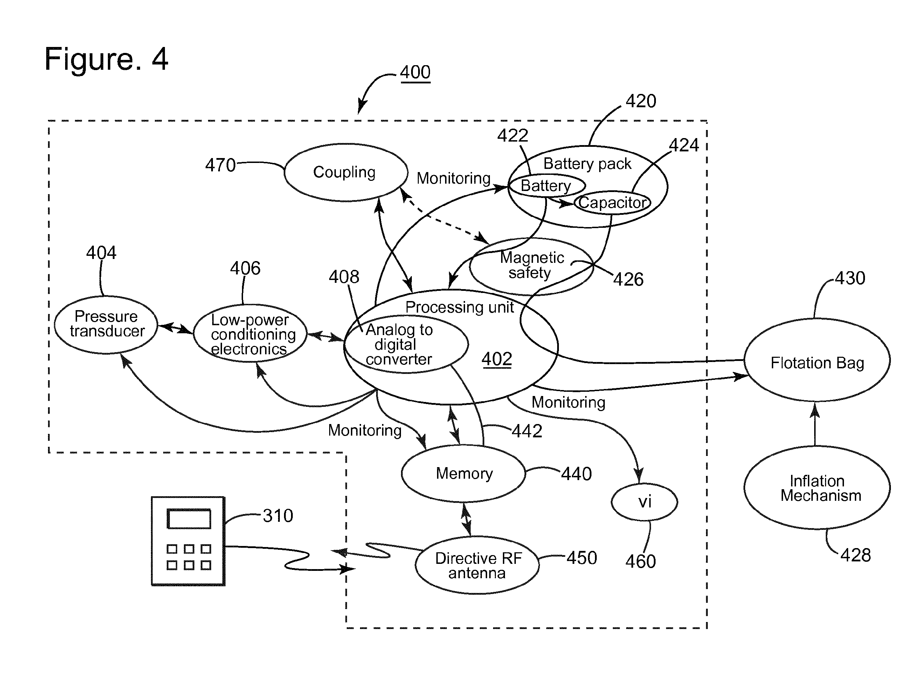

One possible internal configuration of the activation module is illustrated in Figure 4. Those skilled in the art would appreciate that this is an exemplary configuration and more or fewer components may be present. Activation module 400 replaces the traditional pressure switch with a pressure measurement that may be processed to make the activation decision software configurable. Thus, activation module 400 includes a processing unit 402 that communicates with a pressure transducer 404 for receiving the pressure measurement effected by the pressure transducer. Pressure transducer 404 may include a piezoelectric pressure transducer associated with low-power conditioning electronics 406 to make the measurement power-efficient. The transducer may be cycled to optimize power consumption. Output of the conditioning electronics 406 is digitized periodically by a low-power analog-to-digital converter 408.

Processing unit 402 may manage the power supply of the pressure measurement chain, i.e., pressure transducer 404, conditioning electronics 406 and analog-to-digital converter 408. Thus, the measurement chain may only be powered for a short duration, periodically, to increase battery life. Processing unit 402 is also connected to a battery pack 420 for receiving necessary power. Processing unit 402 periodically monitors several levels to check for good behavior of the system, e.g., it measures the current drawn by the pressure transducer, the voltage levels in the battery pack 420, and resistance of flotation bag 430 input. Battery pack 420 may include a battery 422 or another power source (e.g., hydrodynamic source) and a capacitor 424 (or super-capacitor) that is able to provide a high current to the flotation bag or inflation mechanism 428 during activation, boosting the power in the battery. In one embodiment, the SRD may be electrically connected to the streamer, in which case there is no need for a battery. In another embodiment, the SRD is integrated into the streamer, in which case again there is no need for a battery. In these cases, an inductive coupling or another type of coupling 470 may be present and configured to receive power from the streamer for supplying power to the various elements discussed with regard to Figure 4. Note that coupling 470 may connect directly to processing unit 402 as illustrated in Figure 4, or indirectly, through a magnetic safety mechanism 426 described next.

However, if a battery is used, a watertight battery pack may be used. A safety mechanism 426 may be used to cut the power supply when the SRD is not in operation. The same safety mechanism 426 may be configured to shorten the output of the electronics when the SRD is not in operation. To increase battery life, a Thionyl Chloride Lithium battery may be used to supply power to the electronics.

A memory 440 is also provided and may serve as an interface between processing unit 402 and programming device 310. The programming device can interact, i.e., read and/or modify the content of the memory via, for example, radiofrequency communication. If the programming device is a tablet, laptop or other portable device, it may use another wireless communication scheme as noted above. Processing unit 402 can read or modify the content of the memory 440 via a programming bus 442. An antenna 450 may be connected to memory 440 or processing unit 402 for communicating with programming device 310. Antenna 450 may be an RFID antenna, e.g., a coil-type antenna to improve its performance (directivity). Activation module 400 may also include an interface 460 capable of sending visual and/or auditive information to the operator. For example, interface 460 may include an LED as discussed later. Alternatively, an audio device may be used to send an acoustic signal (e.g., beeps) to the operator.

This hardware configuration of the activation module is based on the processing unit allowing implementation of various improvements in safety, activation process and post-crash management as discussed next. While the processing unit may implement all these features, there is no requirement to do so. Any one of these features is considered to be novel in the context of SRD and, thus, they are now discussed in turn.

One advantage of the present implementation is that the activation module allows refinement of the event that triggers flotation bag activation. In the case of the current system, activation occurs when measured pressure is greater than defined activation pressure, or depth threshold, because the pressure switch is simply toggled.

However, the present processing unit allows more flexibility in defining the event that would trigger flotation bag deployment. For example, in one application, flotation bag activation occurs only when the measured pressure or depth is within a defined range, e.g., from activation pressure to a predetermined maximum pressure. In other words, considering some exemplary numbers, if the activation pressure is 5 x 10⁵ Pa and the predetermined maximum pressure is 7 atm, activation is not triggered by a pressure of 4 x 10⁵ Pa or a pressure of 9 x 10⁵ Pa, but only by a pressure between 5 x 10⁵ and 7 x 10⁵ Pa. In this way, this implementation avoids measurement errors or useless activations.

In another embodiment, activation occurs only when the measured pressure or calculated depth stays within a given range for a given minimum duration, to again avoid measurement errors or unexpected activation due to pressure transients. Thus, for example, activation may happen only when measured pressure is between 5 and 7 atm for 30 s. If the measured pressure is in this range for only 20 s and then it returns to a normal value, activation does not occur.

In still another embodiment, activation occurs only when the measured pressure has been within a diving range for a given duration of time. Such diving range and duration would be defined to prevent unexpected activation onboard the vessel during deployment.

Another function that may be achieved by the SRD is related to post-crash management. None of the current recovery devices provide this information, according to the inventors' knowledge. This function stores the measured pressures following or around activation of the SRD. In other words, when activation occurs, it triggers recording of the last measured pressures and measurements to be stored in time in the embedded memory 440 until this memory is full or until the batteries are depleted. This information can later be recovered and analyzed to determine what kind of pressures the streamer has experienced.

Not lastly, the capability to interact with the activation module from outside the streamer makes the handling of many SRDs easier, because a single programming device may be used by a single person to communicate and configure all the SRDs' processors during a seismic survey.

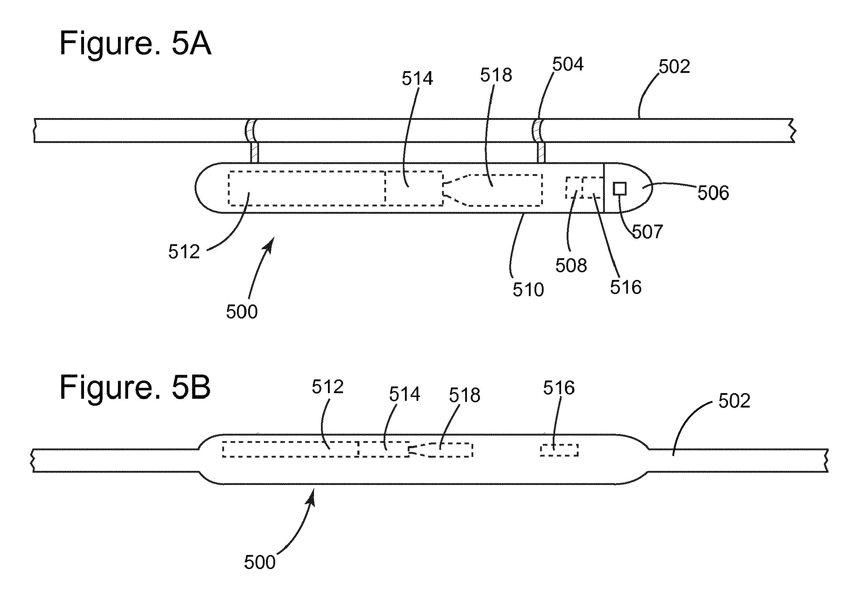

Figure 5A illustrates one possible embodiment of the SRD discussed above. An SRD device, indicated by reference 500 in Figure 5A, may be attached to a streamer 502 with exterior brackets 504, which are mounted on the streamer. A head 506 of the SRD may include a visual indicator 507 (e.g., LED or a small screen) for quickly presenting information to the operator. A battery pack 508 may be located inside the SRD body 510. Flotation bag 512 is folded inside the SRD and connected to a valve 514 or other mechanism that achieves fluid connection between the flotation bag and gas bottle 518. Valve 514 is controlled by activation module 516. Activation module 516 and battery pack 508 may be mechanically attached to head 506 for easy replacement and/or removal. Head 506 is removably attached to body 510. Valve 514 is also connected to gas bottle 518 (e.g., CO₂ gas) under pressure. When activation module 516 determines that the flotation bag should be inflated, it sends a control signal to valve 514 to allow fluid connection between gas bottle 518 and flotation bag 512. The pressure exerted by flotation bag 512 on body 510 is designed to be enough to break apart body 510 to allow for free inflation of flotation bag 512. Figure 5B shows a similar SRD, but integrated within streamer 502.

In one embodiment, the activation module is configured to store activation parameters, for example, in a memory attached to a printed circuit board fixed to the head of the SRD. An activation parameter may be a pressure. However, other quantities may be used for the activation parameter. An oscillator periodically wakes up the processor. When the processor is awakened, it is configured to power up the pressure transducer and its conditioning electronics, measure their output voltage, and then power these elements down and compute the pressure from the measured level. The processor may also be configured to power up the conditioning electronics to measure the voltage levels in the battery pack and/or it powers up the conditioning electronics to measure the resistance of the load. Then, the processor compares the measured values to one or more reference values and, in case of an abnormal value, is configured to store all of them in memory.

In one embodiment, the processor may also be configured to power up the LED or another visual interface, every second or at another given time, when an abnormal value has been detected, for example, only when the measured depth is not greater than 5 m for 2 minutes. Alternatively or in addition, the processor may be configured to power up the LED every 3 seconds when no abnormal value has been detected. Thus, the operator of the survey can easily, and without the need of any instrument (e.g., programming device), evaluate the status of the SRD. It is also possible to configure the processor to store the last measured values in memory every minute, so that this information can be later used as reference for the pressure measurement. If the processor determines a depth greater than the activation depth while the measured depth is greater than 5 m for more than 5 minutes, it may power up its load, i.e., it may activate the valve or explosion mechanism or any other mechanism for inflating the flotation bag.

Optionally, after having powered the load, the processor may continue to measure the depth periodically, and fill the memory with the measured values for post-crash analysis purposes. For example, after the streamer is recovered, it is useful to know what maximum depth the streamer has reached and for how long, because some electronics inside the streamers are not designed to withstand great pressures.

The activation module discussed above advantageously allows the operator to change and check the activation depth without dismantling the SRD, but also to have access to activation parameters when implemented (operation recognition, filtering, delaying activation). The activation module also allows for checking the battery levels, device serial number, debugging information and crash information without dismantling the SRD. This is possible because the activation module can wirelessly communicate with an external device and also because there is no power switch to automatically activate the flotation bag. Further, because the comparison of the measured pressure with threshold depth is performed in software, all this information is now accessible to the operator, even in real time. Further, this configuration of the activation module allows the streamer recovery device to be shipped in agreement with the material safety data sheet of the explosive it might include. Also, the activation module can record streamer depth evolution following a specific event, such as a crash, for example, or a succession of events.

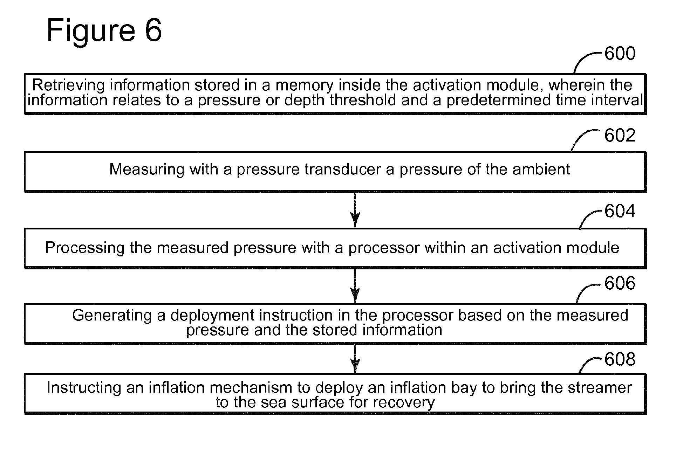

According to an exemplary embodiment illustrated in Figure 6, there is a method for recovering a streamer lost at sea. The method includes a step 600 of retrieving information stored in a memory inside the activation module, wherein the information relates to a pressure or depth threshold and a predetermined time interval; a step 602 of measuring with a pressure transducer a pressure of the ambient; a step 604 of processing the measured pressure with a processor within an activation module; a a step 606 of generating a deployment instruction in the processor based on the measured pressure and the stored information; and a step 608 of instructing an inflation mechanism to deploy an inflation bag to bring the streamer to the sea surface for recovery. Note that steps 602 and 604 may be repeated a couple of times prior to another occurrence of step 600, i.e. steps 602 and 604 may occur periodically, for example, every N occurrence of step 600, where N is a number between 1 and 200.

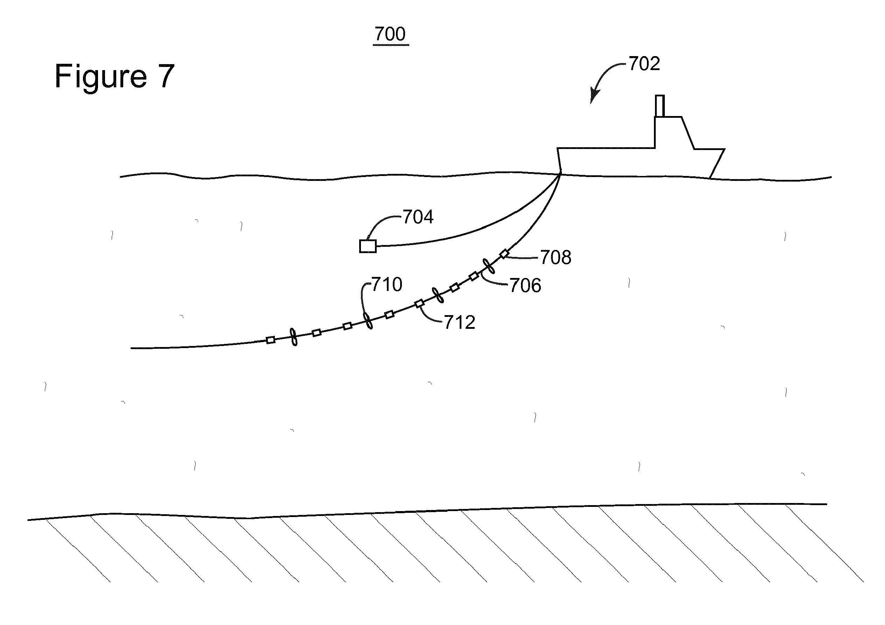

A seismic survey system 700 that incorporates one or more SRD as discussed above is now discussed with regard to Figure 7. System 700 includes a vessel 702 that tows a seismic source array 704 and at least one streamer 706. Seismic source array 704 may include plural seismic source elements, which may be airguns, vibrating units, electromagnetic units, etc. The individual source elements may be disposed at a same depth or at varying depths, to form a multi-component source array. Streamer 706 includes plural seismic sensors 708 distributed along the streamer. The seismic sensor may be one of a hydrophone, accelerometer, geophone, electromagnetic sensor, or a combination thereof. Steering device 710 may also be distributed along the streamer for controlling a position of the streamer. One or more SRD devices 712 may be attached to each section of the streamer. The number of SRD devices per streamer section may vary.

The disclosed exemplary embodiments provide an activation module and a method for inflating a flotation bag for recovering a streamer or other seismic equipment when a predetermined depth in a marine environment is reached. It should be understood that this description is not intended to limit the invention. On the contrary, the exemplary embodiments are intended to cover alternatives, modifications, and equivalents, which are included in the spirit and scope of the invention as defined by the appended claims. Further, in the detailed description of the exemplary embodiments, numerous specific details are set forth to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone, without the other features and elements of the embodiments, or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. An activation module (400) to be used in a seismic equipment recovery device, the activation module (400) comprising:
a processor (402);
a pressure transducer (404) configured to measure a pressure of the ambient and provide the measured pressure to the processor (402);
a memory (440) connected to the processor (402) and configured to store information related to a pressure or depth threshold; and
a communication unit (450) connected to the memory (440) and configured to exchange information with an external device (310),
wherein the processor (402) is configured to send a deployment instruction to an inflation mechanism (428) to inflate a flotation bag (430) based on the measured pressure and the stored information.

2. The activation module of Claim 1, wherein the stored information includes a threshold depth or pressure.

3. The activation module of Claim 2, wherein the stored information further includes a predetermined time interval.

4. The activation module of Claim 3, wherein the stored information further includes a depth or pressure range and the processor is configured to send the deployment instruction to the inflation mechanism only if the measured pressure is within the pressure range for the predetermined time interval.

5. The activation module of Claim 1, wherein the communication unit comprises an antenna that wirelessly exchanges the information with the external device.

6. The activation module of Claim 1, wherein the communication unit uses a radio frequency band to communicate with the external device.

7. The activation module of Claim 1, wherein the processor is configured to store in the memory measured pressures before and/or after sending the deployment instruction.

8. The activation module of Claim 1, wherein the memory is configured to allow the external device to read its information.

9. The activation module of Claim 1, further comprising:
an interface (460) for sending visual information to an operator of the activation module.

10. The activation module of Claim 1, further comprising:
a battery pack (420) for providing power to the processor (402).

11. The activation module of Claim 1, further comprising:
a coupling (470) for connecting to a streamer for receiving power.

12. A streamer recovery device (300) for recovering a streamer lost at sea, the streamer recovery device (300) comprising:
a flotation bag (430);
an inflation mechanism (428) for inflating the flotation bag (430); and
an activation module (400) configured to send a deployment instruction to the inflation mechanism (428) to inflate the flotation bag (430) based on (i) a measured pressure and (ii) stored information.

13. The streamer recovery device of Claim 12, wherein the activation module comprises:
a processor (402);
a pressure transducer (404) configured to measure the pressure of the ambient and provide the measured pressure to the processor (402);
a memory (440) connected to the processor (402) and configured to store the information, which is related to a pressure or depth threshold; and
a communication unit (450) connected to the memory (440) and configured to exchange, wirelessly, information with an external device (310),
wherein the processor (402) is configured to send the deployment instruction.

14. The streamer recovery device of Claim 12, wherein the stored information includes a threshold depth or pressure.

15. A seismic survey system (700) for acquiring seismic data, the system (700) comprising:
a streamer (706) having plural seismic sensors (708); and
at least a streamer recovery device (712) on the streamer (706),
wherein the streamer recovery device (712) includes,
a flotation bag (430),
an inflation mechanism (428) for inflating the flotation bag (430), and
an activation module (400) configured to send a deployment instruction to the inflation mechanism (428) to inflate the flotation bag (430) based on (i) a measured pressure and (ii) stored information.
